(19) Europäisches Patentamt
European Patent Office
Office européen des brevets

(11) **EP 2 169 359 A1**

(12) **EUROPÄISCHE PATENTANMELDUNG**

(43) Veröffentlichungstag:
**31.03.2010 Patentblatt 2010/13**

(51) Int Cl.:
***G01F 1/56*** *(2006.01)*    ***G01F 1/66*** *(2006.01)*

(21) Anmeldenummer: **09012190.6**

(22) Anmeldetag: **25.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **26.09.2008   DE 202008012801 U**

(71) Anmelder: **Gebr. Kemper GmbH + Co. KG Metallwerke**
**57462 Olpe (DE)**

(72) Erfinder: **Blumenthal, Roland, Dr.**
**50374 Erfstadt (DE)**

(74) Vertreter: **Grünecker, Kinkeldey, Stockmair & Schwanhäusser**
**Anwaltssozietät**
**Leopoldstrasse 4**
**80802 München (DE)**

(54)  **Messarmatur und Verfahren zur Ermittlung eines Differenz- oder Summenvolumenstromes**

(57)    Die vorliegende Erfindung betrifft eine Messarmatur und ein Verfahren zur Volumenstrommessung in einer insbesondere an eine Trink- oder Brauchwasser-Versorgungsleitung über einen Strömungteiler angeschlossene Ringleitung. Mit der vorliegenden Erfindung soll eine Messarmatur sowie ein Verfahren zur Ermittlung eines Differenz- oder Summenvolumenstromes angegeben werden, mittels derer ein Wasserverbrauch in der Ringleitung ermittelt werden kann. Eine erfindungsgemäße Messarmatur sowie ein erfindungsgemäßes Verfahren beruhen auf dem Prinzip des Erzeugens einer elektrischen Spannung durch Wechselwirkung eines Magnetfeldes mit einem elektrisch leitfähigen strömenden Mediums und zeichnen sich im wesentlichen durch ein Messrohr (1) aus, das wenigstens zwei Strömungskanäle (2, 3) aufweist, die jeweils senkrecht zu ihrer Erstreckungsrichtung von einem Magnetfeld (B) durchsetzbar sind, wobei jedem Strömungskanal (2, 3) eine von wenigstens zwei diametral angeordneten Messelektroden (5, 7) zugeordnet ist, mit Hilfe derer in Verbindung mit einer in der diametralen Anordnungsebene der Messelektroden (5, 7), zwischen den Strömungskanälen (2, 3) vorgesehene Mittelelektrode (6) eine in dem Messrohr (1) induktiv erzeugte Gesamtspannung (U) erfassbar ist, mit Hilfe welcher der Differenz- oder Summenvolumenstrom ermittelt wird. Eine weitere erfindungsgemäße Messarmatur und ein weiteres erfindungsgemäßes Verfahren beruhen auf dem Prinzip einer Signallaufzeitmessung von in einem fließenden Medium in entgegengesetzte Richtungen ausgesandte Ultraschallwellen und zeichnen sich im wesentlichen durch ein Messrohr (1) aus, dass wenigstens zwei Strömungskanäle (12, 13) umfasst, die wenigstens im Ersteckungsbereich einer Ultraschallanordnung einen gemeinsamen Ultraschall durchlässigen Trennwandabschnitt (14) aufweisen, wobei verfahrensmäßig der Differenz- oder Summenvolumenstrom mit Hilfe der gemessenen Signallaufzeiten ermittelt wird.

Fig. 1

**Beschreibung**

Die vorliegende Erfindung betrifft eine Messarmatur und ein Verfahren zur Volumenstrommessung in einer insbesondere an eine Trink- oder Brauchwasser-Versorgungsleitung über einen Strömungsteiler angeschlossene Ringleitung.

Im Bereich der Trink- und Brauchwassersysteme wird ein Wasserverbrauch von Kalt- und Warmwasser beispielsweise über einen ein- oder mehrstrahligen Wasserzähler ermittelt, der den Volumenstrom des durch den Wasserzähler geleiteten Fluidstroms misst und daraus den Wasserverbrauch ableitet. Die Messung der Strömungsgeschwindigkeit wird z.B. über einen Flügelradzähler realisiert, dessen Rotationsgeschwindigkeit von der Strömungsgeschwindigkeit des durchgeleiteten Wassers abhängig ist. Durch laufendes Abzählen und Addieren der Flügelradumdrehungen ergibt sich so das durchgeflossene Volumen.

Solche Wasserzähler haben den Nachteil, dass mit deren Anschluss an die Leitung ein relativ hoher Druckverlust in der Leitung einhergeht. Des Weiteren sind die Wasserzähler mit der Einführung von Kaltwasserhygienesystemen, bei denen überwiegend ein Strömungsteiler zum Anschluss einer wenigstens einen Verbraucher aufweisenden Ringleitung an eine Trink- oder Brauchwasser-Versorgungsleitung verwendet wird, um in der Ringleitungen eine Spülströmung entweder bei Wasserentnahme in einer der Ringleitung nachgeordneten weiteren Ringleitung oder eine kontinuierliche Spülströmung durch eine in dem Strömungsteiler erzeugte Druckdifferenz zu realisieren, für eine Wasserverbrauchsmessung in solch einer Ringleitung nachteilig. Zum Einen sind wenigstens zwei Wasserzähler erforderlich, wobei der eine Wasserzähler an der Zuleitung der Ringleitung und der andere Wasserzähler an der Rückleitung der Ringleitung anzuschließen ist. Zum Anderen sind die Wasserzähler zur Ermittlung des tatsächlichen Wasserverbrauches in der Ringleitung voneinander getrennt auszuwerten. Eine Zuleitung im Sinne der vorliegenden Erfindung ist derjenige Leitungsabschnitt der Ringleitung, welcher den Volumenstrom von einer Trink- oder Brauchwasser-Versorgungsleitung zu dem in der Ringleitung angeschlossenen Verbraucher leitet, über welchen die Wasserentnahme bzw. der Wasserverbrauch stattfindet. Unter einer Rückleitung im Sinne der vorliegenden Erfindung ist ein in Strömungsrichtung der Ringleitung dem Verbraucher nachgeordneter Leitungsabschnitt zu verstehen, der den Volumenstrom von dem Verbraucher zu der Trinkwasser- oder Brauchwasser-Versorgungsleitung zurückleitet.

Weiterhin steht mit Anschluss der Ringleitung an eine Trink- oder Brauchwasser-Versorgungsleitung über einen Strömungsteiler, wie beispielsweise einen aus der auf die Anmelderin zurückgehenden deutschen Gebrauchsmusterschrift DE 20 2008 003 044 bekannten Strömungsteiler, nur eine geringe Druckdifferenz zur Verfügung, um eine Spülströmung in der Ringleitung aufrecht zu erhalten. Somit wirken sich zusätzlich an der Ringleitung angeschlossene Armaturen, seien es Armaturen zum Absperren oder solche zum Messen, die üblicherweise einen gewissen Druckverlust mit sich bringen, nachteilig auf die in der Ringleitung erzeugte Spülströmung aus. Bei einem wie vorstehend beschriebenen erforderlichen Anschluss von wenigstens zwei Wasserzählern wäre der entsprechende Druckverlust in der Ringleitung doppelt so groß, womit eine Spülströmung und damit die beabsichtigte Hygienewirkung der Spülströmung annähernd verhindert wird. Ferner können die üblichen Wasserzähler nur in einer Strömungsrichtung betrieben werden. Somit sind diese Wasserzähler für einen Anschluss an einer Rückleitung der Ringleitung ungeeignet, da die Rückleitung der Ringleitung in beiden Richtungen durchströmbar ist.

Eine Aufgabe der vorliegenden Erfindung ist es, eine Messarmatur zur Volumenstrommessung bereitzustellen, die einen Wasserverbrauch insbesondere in einer über einen Strömungsteiler an eine Trink- oder Brauchwasser-Versorgungsleitung angeschlossene Ringleitung ermitteln kann.

Zur Lösung der obigen Aufgabe wird mit der vorliegenden Erfindung eine Messarmatur zur Volumenstrommessung in einer insbesondere an eine Trink- und/oder Brauchwasser-Versorgungsleitung über einen Strömungsteiler angeschlossene Ringleitung mit den Merkmalen von Anspruch 1 angegeben.

Die Messarmatur umfasst ein Messrohr, das mit einem mittels Magnetanordnung erzeugten Magnetfeld durchsetzt wird und wenigstens zwei diametral angeordnete Messelektroden zur Messung einer induktiv erzeugten Spannung aufweist, wobei die Messelektroden mit einer Messeinrichtung zur Ermittlung, Anzeige und/oder Übertragung des ermittelten Volumenstromes verbunden sind. Die Messarmatur ist gekennzeichnet durch das Messrohr, das wenigstens zwei Strömungskanäle umfasst, die jeweils von dem Magnetfeld senkrecht zu Ihrer Erstreckungsrichtung durchsetzt werden, wobei jedem Strömungskanal eine der diametral angeordneten Messelektroden zugeordnet ist, mit Hilfe derer in Verbindung mit einer in der diametralen Anordnungsebene der Messelektroden, zwischen den Strömungskanälen vorgesehene Mittelelektrode eine in dem Messrohr induktiv erzeugte Gesamtspannung erfassbar ist. Die vorbezeichnete Messarmatur basiert auf dem Messprinzip des magnetisch induktiven Messverfahrens. Damit ist die Messarmatur druckverlustarm und insbesondere für Ringleitungen geeignet, in denen eine Ringleitungsströmung aufgrund einer minimalen Druckdifferenz erzeugt wird. Des Weiteren kann die erfindungsgemäße Messarmatur beispielsweise in Trink- oder Brauchwasserleitungssystemen verwendet werden, da Trink- und Brauchwasser ein elektrisch leitendes Medium ist, wodurch eine in jedem Strömungskanal induktiv erzeugte Teilspannung während des Durchleitens des elektrisch leitenden Mediums messbar ist. Eine aus den Teilspannungen ermittelte Gesamtspannung ist proportional zu einem im Sinne der vorliegenden Erfindung verstandenen Differenz- oder Summenvolumenstrom, der ein Volumenstrom ist, welcher über den an die Ringleitung angeschlossenen Verbraucher entnommen wurde. In Kenntnis der Querschnittsgeometrie der Strömungskanäle, der Magnetfeldstärke und einem eine Gerätekonstante umfassenden Proportionalitätsfaktor kann basierend auf der ermittelten Gesamtspannung der Wasserverbrauch in der Ringleitung zuverlässig und druckverlustarm gemessen werden.

In einer bevorzugten Ausgestaltung der vorliegenden Erfindung verfügen die Strömungskanäle wenigstens über einen gemeinsamen Trennwandabschnitt. Vorzugsweise ist der Trennwandabschnitt wenigstens in einer Querschnittsebene der diametral angeordneten Messelektroden angeordnet, wobei der Trennwandabschnitt in dieser Ebene die diametral zu den Messelektroden angeordnete Mittelelektrode umfasst. Die Mittelelektrode sorgt an der Trennwandstelle für einen Potentialausgleich. Durch diese Mittelelektrode ist die Messung nur einer Spannung über die beiden äußeren Elektroden ausreichend, die dann direkt proportional dem vorher beschriebenen Differenz- oder Summenvolumenstrom ist.

Nach einer weiteren bevorzugten Ausgestaltung der vorliegenden Erfindung weisen die Strömungskanäle wenigstens im Erstreckungsbereich des Trennwandabschnittes eine gleiche Querschnittsgeometrie auf. Unter einer Querschnittsgeometrie im Sinne der vorliegenden Erfindung wird ein eine Durchtrittsfläche in der Trennwandabschnittsebene ausbildendes Innenmaß des Strömungskanals verstanden. Vorzugsweise ist das Innenmaß der jeweiligen Strömungskanäle dergestalt, dass zum Einen deren Durchtrittsflächen und zum Anderen deren Elektrodenabstände zwischen zwei diametral gegenüberliegenden Elektroden einen gleichen Wert aufweisen. Besonders bevorzugt sind die Strömungskanäle wenigstens im Erstreckungsbereich des Trennwandabschnitts, weiter bevorzugt vollständig identisch ausgebildet, wodurch das Messrohr kostengünstig herstellbar ist.

Weiterhin bevorzugt ist die Messeinrichtung derart ausgelegt, dass in den jeweiligen Strömungskanälen ein Magnetfeld mit gleicher Feldstärke erzeugt wird, die Summe der in den Strömungskanälen vorhandenen Teilspannungen als eine Gesamtspannung direkt erfasst und der Differenz- oder Summenvolumenstrom mit Hilfe der allgemeingültigen Formel $Q_P = U * A / (k * B * D)$ ermittelt wird, wobei U die erfasste Gesamtspannung, A die durchströmte Querschnittsfläche, B die Magnetfeldstärke, D der direkte Elektrodenabstand zweier gegenüberliegender Messelektroden und k ein vorbestimmt gewählter Proportionalitätsfaktor ist. Somit kann die der Messeinrichtung zugeordnete Sensorik und Auswertelektronik einfach gehalten werden.

Die vorstehend genannte Aufgabe wird alternativ mit einer Messarmatur mit den Merkmalen nach Anspruch 6 gelöst. Die erfindungsgemäße Messarmatur nutzt das gleichfalls druckverlustarme Messprinzip eines Ultraschall-Messverfahrens. Die erfindungsgemäße Messarmatur umfasst ein Messrohr, das mit einem mittels Ultraschallanordnung erzeugten Ultraschallsignal durchsetzt wird, wobei die Ultraschallanordnung wenigstens zwei Ultraschallsender mit Empfänger umfasst, die in einer Querschnittsebene des Messrohres diametral und in Strömungsrichtung unter einem bestimmten Winkel zueinander versetzt an dem Messrohr angeordnet sind und mit einer Messeinrichtung zur Ermittlung, Anzeige oder Übertragung des gemessenen Volumenstromes verbunden sind. Die erfindungsgemäße Messarmatur zeichnet sich dadurch aus, dass das Messrohr zwei Strömungskanäle umfasst, die wenigstens im Erstreckungsbereich der Ultraschallanordnung einen gemeinsamen ultraschalldurchlässigen Trennwandabschnitt aufweisen. Mit Hilfe der erfindungsgemäßen Messarmatur lassen sich die gleichen Vorteile wie mit der vorstehend beschriebenen erfindungsgemäßen Messarmatur erreichen.

Gemäß einer bevorzugten Ausgestaltung der Messarmatur nach der vorliegenden Erfindung weisen die Strömungskanäle im Erstreckungsbereich des Trennwandabschnittes eine gleiche, besonders bevorzugt identische Querschnittsgeometrie auf. Die gleiche Querschnittsgeometrie der Strömungskanäle wird dadurch erreicht, dass einerseits die diametralen Abstände zwischen dem einen Ultraschallsender mit Empfänger in Richtung des anderen Ultraschallsender mit Empfänger zu dem Trennwandabschnitt und andererseits die Durchtrittsflächen entlang der Erstreckungsrichtung des Trennwandabschnittes den selben Wert aufweisen. Die identische Querschnittsgeometrie resultiert aus einer identischen Ausgestaltung der Strömungskanäle wenigstens im Bereich des gemeinsamen Trennwandabschnitts. Besonders bevorzugt sind die Strömungskanäle vollständig identisch ausgebildet. Die gleichartige oder identische Ausgestaltung der Strömungskanäle erlaubt eine kostengünstigere Herstellung des Messrohres.

Weiter bevorzugt ist die Ultraschallanordnung derart ausgelegt, dass die von den Empfängern gemessenen Ultraschall-Signallaufzeiten nach gleichzeitiger Aussendung des Ultraschallsignals von den Sendern zu den Empfängern an die Messeinrichtung übermittelt wird, und dass die Messeinrichtung vorgesehen ist, auf Basis der gemessenen Signallaufzeiten den Differenz- oder Summenvolumenstrom zu ermitteln. Die Messeinrichtung der erfindungsgemäßen Messarmatur lässt sich dadurch mit aus der US-Volumenstrommesstechnik bekannten Sensorik und Auswerteelektronik ausstatten.

Gemäß einer weiteren bevorzugten Ausgestaltung der vorliegenden Erfindung ist die Messarmatur nach einer der beiden vorgenannten Alternativen zwischen dem Strömungsteiler und der Ringleitung derart angeschlossen, dass die Strömungskanäle jeweils mit einem an die Trink- oder Brauchwasser-Versorgungsleitung angeschlossenen, der Ringleitung zugeordneten Leitungsabschnitt verbunden sind. Beispielsweise kann der eine Strömungskanal mit dem Zuleitungsabschnitt der Ringleitung und der andere Strömungskanal mit dem Rückleitungsabschnitt der Ringleitung verbunden sein. Dabei kann der Rückleitungsabschnitt ebenfalls einen wie vorbeschrieben verstandenen Zuleitungsabschnitt definieren, wenn bei Entnahme von Trink- oder Brauchwasser über einen an die Ringleitung angeschlossenen Verbraucher das Trink- oder Brauchwasser gleichfalls von der Trink- oder Brauchwasser-Versorgungsleitung über den Rückleitungsabschnitt zu dem Verbraucher strömt. Damit kann der in der Ringleitung entstandene Trink- oder Brauchwasserverbrauch über eine einzige Messarmatur druckverlustarm und unabhängig von der in den Strömungskanälen vorherrschenden Strömungsrichtung ermittelt werden.

Nach einer weiteren bevorzugten Ausgestaltung sind die Strömungskanäle der Messarmaturen nach einer der beiden vorgenannten Alternativen parallel zueinander angeordnet. Dadurch ist das Messrohr der Messarmatur weiter vereinfachbar.

Eine weitere Aufgabe der vorliegenden Erfindung ist es, ein Verfahren zur Volumenstrommessung bereitzustellen, mit welchem ein Wasserverbrauch insbesondere in einer über einen Strömungsteiler an eine Trink- oder Brauchwasser-Versorgungsleitung angeschlossene Ringleitung ermittelt werden kann.

Zur Lösung der vorgenannten Aufgabe wird mit der vorliegenden Erfindung ein Verfahren zur Ermittlung eines Differenz- oder Summenvolumenstromes in einer insbesondere an eine Trink- und/oder Brauchwasser-Versorgungsleitung über einen Strömungsteiler angeschlossene Ringleitung mit den Merkmalen nach Anspruch 10 sowie ein alternatives Verfahren mit den Merkmalen nach Anspruch 12 angegeben. Das erfindungsgemäße Verfahren nach dem Anspruch 10 basiert auf dem der Messarmatur nach Anspruch 1 zugrundeliegendem Prinzip des Erzeugens einer elektrischen Spannung in einem Messrohr mit wenigstens zwei Strömungskanälen durch Wechselwirkung eines in den Strömungskanälen angelegten Magnetfeldes mit einem durch die Strömungskanäle strömenden elektrisch leitfähigen Mediums. Das erfindungsgemäße Verfahren nach dem Anspruch 12 beruht auf dem der Messarmatur nach dem Anspruch 5 zugrundeliegendem Prinzip einer in einem Messrohr mit wenigstens zwei Strömungskanäle durchführbaren Signallaufzeitmessung von in einem fließenden Medium in entgegengesetzte Richtungen aussendbare Ultraschallwellen. Mit den vorgenannten Verfahren kann der einen Wasserverbrauch angebene Differenz- oder Summenvolumenstrom auf Basis der gemessenen Gesamtspannung bzw. der gemessenen Signallaufzeiten zuverlässig und druckverlustarm ermittelt werden.

Bevorzugte Ausführungsformen der erfindungsgemäßen Verfahren sind mit den entsprechenden Unteransprüchen angegeben.

Weitere Einzelheiten, Vorteile und Merkmale der vorliegenden Erfindung ergeben sich aus der nachfolgenden Beschreibung zweier Ausführungsbeispiele in Verbindung mit der Zeichnung. In dieser Zeichnung zeigen:

Fig. 1    eine schematische Darstellung eines Messrohres einer Messarmatur nach einem ersten Ausführungsbeispiel der vorliegenden Erfindung; und

Fig. 2    eine schematische Darstellung eines Messrohres einer Messarmatur nach einem zweiten Ausführungsbeispiel der vorliegenden Erfindung.

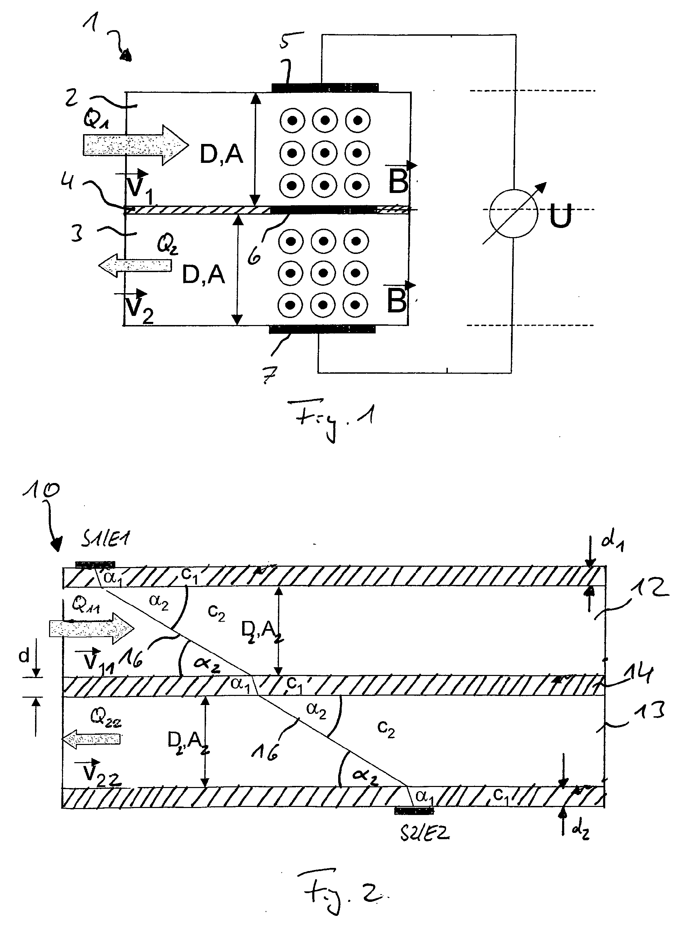

Die Figur 1 zeigt eine schematische Darstellung eines Messrohres der Messarmatur nach der vorliegenden Erfindung, welche mit Hilfe des magnetisch induktiven Messverfahrens den Differenz- oder Summenvolumenstrom zwischen den Strömungskanälen der Messarmatur als den in der Ringleitung durch Wasserentnahme bedingten Wasserverbrauch ermittelt. Das Messrohr 1 umfasst einen ersten Strömungskanalabschnitt 2 und einen zweiten Strömungskanalabschnitt 3, die zueinander parallel angeordnet und über einen gemeinsamen Trennwandabschnitt 4 voneinander getrennt sind. Der erste und zweite Strömungskanalabschnitt 2, 3 weisen einen gleichen Durchmesser D und eine gleiche Durchtrittsfläche A auf, wodurch die Strömungskanäle eine zueinander identische Querschnittsgeometrie ausbilden. Der erste Strömungskanalabschnitt 2 umfasst eine erste Messelektrode 5, die auf der dem Trennwandabschnitt 4 gegenüberliegenden Seite des ersten Strömungskanalabschnitts 2 angeordnet ist. Der zweite Strömungskanalabschnitt 3 umfasst eine zweite Messelektrode 7, die diametral zu der ersten Messelektrode 5 und dem Trennwandabschnitt 4 gegenüberliegend vorgesehen ist. In der Ebene der diametral angeordneten ersten und zweiten Messelektrode 5, 7 ist eine Mittelelektrode 6 vorgesehen, die sowohl in Kontakt mit dem Fluid im Abschnitt 2 als auch dem Fluid im Abschnitt 3 steht und die direkte Messung der Gesamtspannung U ermöglicht.

In dem Anordnungsbereich der diametral zueinander angeordneten ersten und zweiten Messelektroden 5, 7 und der Mittelelektrode 6 sind einer nicht dargestellten Magnetanordnung zugeordnete Mittel vorgesehen, die den ersten und zweiten Strömungskanal 2, 3 mit einem Magnetfeld B durchsetzen, das senkrecht zur Erstreckungsrichtung der Strömungskanäle 2, 3 ausgerichtet ist. Ein durch den ersten Strömungskanal 2 durchgeleiteter erster Volumenstrom $Q_1$ weist eine erste Strömungsgeschwindigkeit $v_1$ auf. Ein durch den zweiten Strömungskanal 3 durchgeleiteter zweiter Volumenstrom $Q_2$ strömt z.B. in die entgegengesetzte Richtung zu dem ersten Volumenstrom $Q_1$ mit einer zweiten Strömungsgeschwindigkeit $v_2$, die vom Betrag z.B. kleiner als die erste Strömungsgeschwindigkeit $v_1$ ist. Die ersten und zweiten Volumenströme $Q_1$, $Q_2$ sind Teile eines durch die erfindungsgemäße Messarmatur durchgeleiteten elektrischen Fluids, wie beispielsweise Trink- oder Brauchwasser. Durch die elektrische Leitfähigkeit des Fluids (Wasser) wird bei Anlegen des Magnetfeldes B in dem ersten und dem zweiten Strömungskanal 2, 3 eine induktive Teilspannung $U_1$, $U_2$

erzeugt, die mit Hilfe der ersten und zweiten Messelektrode 5, 7 und der Mittelelektrode 6 gemessen werden kann. Ein Differenz- oder Summenvolumenstrom zwischen dem ersten und zweiten Volumenstrom $Q_1$, $Q_2$ wird mit Hilfe der allgemeingültigen Formeln

$$U = k * B * D * v \qquad (1)$$

und

$$Q = v * A \qquad (2)$$

ermittelt, wobei U die Spannung, k ein Proportionalitätsfaktor, B die Feldstärke des Magnetfeldes, D der direkte Elektrodenabstand zweier gegenüberliegender Messelektroden, v die Strömungsgeschwindigkeit des Volumenstromes, Q der Volumenstrom und A die durchströmte Querschnittsfläche ist.

Für die Teilspannungen $U_1$ und $U_2$ ergibt sich aus (1) folglich

$$U_1 = k * B * D * v_1 \qquad (1.1)$$

und

$$U_2 = k * B * D * v_2. \qquad (1.2)$$

Eine aus den Teilspannungen $U_1$ und $U_2$ ermittelte Gesamtspannung U ergibt sich zu

$$U = U_1 + U_2. \qquad (3)$$

Nach Einsetzen der Gleichungen (1.1) und (1.2) in (3) folgt für die Gesamtspannung U

$$U = k * B * D \, v_q \qquad (3.1),$$

mit $v_q = v_1 + v_2$.
Nach Substitution von v mit $v_q$ in (2) ergibt sich

$$Q_P = U * A / (k * B * D) \qquad (4)$$

mit $Q_P$ als der Differenz- oder Summenvolumenstrom zwischen dem ersten Volumenstrom $Q_1$ und dem zweiten Volumenstrom $Q_2$. Erfindungsgemäß ist es nicht erforderlich, beide Teilspannungen $U_1$ und $U_2$ zu messen. Vielmehr ist die alleinige Messung der Gesamtspannung U zwischen den Elektroden 5 und 7 ausreichend, um den Differenz- oder Summenvolumenstrom nach der obigen Gleichung (4) zu ermitteln.

Basierend auf der Gleichung (4) lässt sich bei Anschluss der vorbeschriebenen erfindungsgemäßen Messarmatur an eine Ringleitung ein aus der Ringleitung entnommener Volumenstrom $Q_P$ ermitteln. Dazu kann einer der beiden Strömungskanäle 2, 3 beispielsweise mit der Zuleitung der Ringleitung und der andere der beiden Strömungskanal 2, 3 mit der Rückleitung der Ringleitung verbunden werden. Solch ein Anschluss kann beispielsweise in einem Abschnitt zwischen einem Strömungsteiler und der Ringleitung erfolgen. Bei Entnahme von durch die Ringleitung durchgeleitetem Trink- oder Brauchwasser über einen an die Ringleitung in Leitungsrichtung zwischen dem ersten und zweiten Strömungskanal 2, 3 der Messarmatur angeordneten Verbraucher reduziert sich die Strömungsgeschwindigkeit $v_1$ des in der Ringleitung zugeleiteten Volumenstroms $Q_1$ um einen zu dem Differenz- oder Summenvolumenstrom $Q_P$ entsprechenden Wert, so dass in dem mit der Rückleitung der Ringleitung verbundenen Strömungskanal 3 der Messarmatur der um den Differenz- oder Summenvolumenstrom $Q_P$ reduzierte Volumenstrom $Q_2$ eine geringere zweite Strömungsgeschwindigkeit $v_2$ aufweist. Der zweite Volumenstrom $Q_2$ strömt beispielsweise in die entgegengesetzte Richtung zu dem ersten Volumenstrom $Q_1$, womit der resultierende Wert für die gemessene Teilspannung $U_2$ negativ ist. Daraus folgt, dass die direkt erfasste Gesamtspannung $U$ einen kleineren Spannungswert als die induktiv erzeugte Teilspannung $U_1$ hat. Der Wert für die Gesamtspannung $U$ vergrößert sich im Verhältnis zu dem induktiv erzeugten Wert für die Teilspannung $U_1$ für den Fall, dass der erste und der zweite Volumenstrom $Q_1$, $Q_2$ in die gleiche Richtung strömen. Mit Hilfe der Gleichung (4) ergibt sich für den Differenz- oder Summenvolumenstrom $Q_P$ ein konkreter Wert, der zu dem über den in der Ringleitung angeschlossenen Verbraucher entnommenen Volumenstrom korrespondiert. Ein bei Wasserentnahme über den Verbraucher erzeugter Wasserverbrauch lässt sich somit auf einfache Art und Weise sowie druckverlustarm und strömungsrichtungsunabhängig mit Hilfe der Messarmatur nach dem ersten Ausführungsbeispiel der vorliegenden Erfindung ermitteln.

Die Figur 2 zeigt eine schematische Darstellung eines Messrohrquerschnitts eines zweiten Ausführungsbeispiels der alternativen Messarmatur nach der vorliegenden Erfindung. Das Messrohr 10 umfasst einen ersten Strömungskanal 12 und einen zweiten Strömungskanal 13, die parallel zueinander angeordnet sind und über einen gemeinsamen Trennwandabschnitt 14 verfügen. Der erste Strömungskanal 12 und der zweite Strömungskanal 13 sind identisch ausgebildet und weisen einen gleichen Durchmesser $D_2$ sowie eine gleiche Durchtrittsfläche $A_2$ auf. An dem ersten Strömungskanal 12 ist dem Trennwandabschnitt 14 gegenüberliegend ein einer nicht näher dargestellten Ultraschallanordnung zugeordneter Ultraschallsender mit Empfänger S1/E1 angeordnet. Ein zweiter Ultraschallsender mit Empfänger S2/E2 ist an dem zweiten Strömungskanal 13 dem Trennwandabschnitt 14 gegenüberliegend und diametral zu dem ersten Ultraschallsender mit Empfänger S1/E1 vorgesehen. Die Ultraschallsender mit Empfänger S1/E1, S2/E2 werden beispielsweise durch eine Piezoelement ausgeformt. Der erste und der zweite Strömungskanal 12, 13 weisen jeweils eine Rohrwanddicke $d_1$, $d_2$ auf, welche für die Ermittlung des Differenz- oder Summenvolumenstroms $Q_P$ zunächst näherungsweise vernachlässigbar sind. Gleichfalls kann die Wandstärke $d$ des Trennwandabschnittes 14 für die Ermittlung näherungsweise vernachlässigt werden. Der erste Ultraschallsender mit Empfänger S1/E1 ist zu dem zweiten Ultraschallsender mit Empfänger S2/E2 in der Querschnittsebene des Messrohres 10 über einen Winkel $\alpha_2$ versetzt angeordnet. Durch den ersten Strömungskanal 12 wird beispielsweise ein erster Volumenstrom $Q_{11}$ mit einer ersten Strömungsgeschwindigkeit $v_{11}$ und durch den zweiten Strömungskanal 13 ein zweiter Volumenstrom $Q_{22}$ mit einer zweiten Geschwindigkeit $v_{22}$ z.B. in entgegengesetzte Richtung zu dem ersten Volumenstrom $Q_{11}$ durchgeleitet. Der Betrag der zweiten Strömungsgeschwindigkeit $v_{22}$ ist z.B. kleiner als der Betrag der ersten Strömungsgeschwindigkeit $v_{11}$. Zur Ermittlung eines Differenz- oder Summenvolumenstroms $Q_P$ zwischen dem ersten und dem zweiten Volumenstrom $Q_{11}$, $Q_{22}$ wird während des Durchleitens der Volumenströme $Q_{11}$, $Q_{22}$ wenigstens ein Ultraschallsignal vorzugsweise gleichzeitig von dem ersten und dem zweiten Ultraschallsender S1, S2 ausgesandt. Das zur Durchleitung der Volumenströme $Q_{11}$, $Q_{22}$ verwendete Medium ist beispielsweise Trink- oder Brauchwasser. Das Ultraschallsignal wird von dem jeweiligen Volumenstrom $Q_{11}$, $Q_{22}$ transportiert, bis das Signal von dem entsprechenden versetzt gegenüberliegenden Empfänger E2, E1 empfangen wird. Die Signallaufzeit des jeweiligen Ultraschallsignals zwischen dem ersten Sender S1 und dem zweiten Empfänger E2 und dem zweiten Sender S2 und dem ersten Empfänger E1 ergibt sich rechnerisch im allgemeinen aus

$$T_{S1 \to E2} = (3 * d/(\sin(\alpha_1) * c_1)) + (D_2/(\sin(\alpha_2) * (c_2 + v_1 * \cos(\alpha_2)))) + (D_2/(\sin(\alpha_2) * (c_2 + v_2 * \cos(\alpha_2)))) \quad (5.1)$$

und

$$T_{S2 \to E1} = (3 * d/(\sin(\alpha_1) * c_1)) + (D_2/(\sin(\alpha_2) * (c_2 - v_1 * \cos(\alpha_2)))) + (D_2/(\sin(\alpha_2) * (c_2 - v_2 * \cos(\alpha_2)))) \quad (5.2)$$

wobei d die Wandstärke der die Strömungskanäle begrenzenden Rohrwandungen mit $d = d_1 = d_2$, $\alpha_1$ der Abstrahlwinkel des Ultraschallsignals innerhalb der Rohrwandungen; $\alpha_2$ der Abstrahlwinkel des Ultraschallsignals innerhalb der Strömungskanäle; $c_1$ die Schallgeschwindigkeit des Ultraschallsignals in den jeweiligen Rohrwandungen; $c_2$ die Schallgeschwindigkeit des Ultraschallsignals in den Strömungskanälen und $D_2$ der diametrale Innenabstand von Sender zu gegenüberliegender Trennwand ist.

Unter Vernachlässigung der gleich großen Wandungsstärke $d = d_1 = d_2$ ergibt sich aus den Gleichungen (5.1) und (5.2) für

$$v_q = v_1 + v_2 = (4\ D_2/\sin(2)\alpha_2)) * ((T_{SS2>E1} - T_{S1->E2})/(T_{S2->E1} * T_{S1->E2})) \qquad (6).$$

Nach Substitution von $v_q$ in der allgemeingültigen Formel nach Gleichung (2) folgt

$$Q_P = (4 * A_2 * D_2 / \sin(2\alpha_2)) * ((T_{S2->E1} - T_{S1->E2})/(T_{S2->E1} * T_{S1->E2})) \qquad (7).$$

Bei einem wie beispielsweise im ersten Ausführungsbeispiel näher beschriebenen gleichen Anschluss der erfindungsgemäßen Messarmatur nach dem zweiten Ausführungsbeispiel resultiert ein in der Ringleitung über einen daran angeschlossenen Verbraucher bedingter Wasserverbrauch aus dem Differenz- oder Summenvolumenstrom $Q_P$ nach Gleichung (7).

Der Differenz- oder Summenvolumenstrom $Q_P$ wird vorzugsweise von der Messeinrichtung der erfindungsgemäßen Messarmaturen ermittelt und zur Anzeige gebracht. Wahlweise kann die Messeinrichtung auch derart ausgestaltet sein, dass der ermittelte Differenz- oder Summenvolumenstrom $Q_P$ beispielsweise über eine Draht- oder Drahtlosverbindung an eine außerhalb der Messarmatur angeordnete Auswertestation übertragen wird.

Die erfindungsgemäßen Messarmaturen nach dem ersten und zweiten Ausführungsbeispiel bieten die selben Vorteile einer druckverlustarmen Messung, einer strömungsrichtungunabhängigen Messung und einer gleichzeitigen Erfassung von mehreren Volumenströmen, womit sich diese Messarmaturen insbesondere für eine an eine Trink- oder Brauchwasser-Versorgungsleitung angeschlossene Ringleitung eignen.

Die erfindungsgemäße Messarmatur nach dem ersten Ausführungsbeispiel nutzt die einfache physikalische Tatsache, dass eine elektrische Spannung durch Wechselwirkung eines Magnetfeldes mit einem elektrisch leitfähigen strömenden Mediums erzeugt wird, wobei die gemessene Spannung proportional zu der Strömungsgeschwindigkeit des Mediums ist.

Die erfindungsgemäße Messarmatur nach dem zweiten Ausführungsbeispiel nutzt die physikalische Tatsache, dass sich Ultraschallwellen in fließenden Medien in Strömungsrichtung schneller ausbreiten als eine Ultraschallwelle in entgegengesetzte Richtung, wobei die ermittelte Signallaufzeit-Differenz zwischen den entgegengesetzt gerichteten Ultraschallwellen direkt proportional zu der Strömungsgeschwindigkeit des durch die Messarmatur durchgeleiteten Mediums ist.

**Bezugszeichenliste**

| | |
|---|---|
| 1, 10 | Messrohr |
| 2, 12 | erster Strömungskanal |
| 3, 13 | zweiter Strömungskanal |
| 4, 14 | Trennwand |
| 5 | erste Messelektrode |
| 6 | Mittelelektrode |
| 7 | zweite Messelektrode |

8          Messlinie zwischen Sender und Empfänger

$A, A_2$      Durchtrittsfläche

B          Feldstärke des Magnetfeldes

D          diametraler Elektrodenabstand

$D_2$       diametraler Abstand zwischen Sender mit Empfänger und gegenüberliegendem Trennwandabschnitt

$Q_1, Q_{11}$   erster Volumenstrom

$Q_2, Q_{22}$   zweiter Volumenstrom

$U_1$        erste Teilspannung

$U_2$        zweite Teilspannung

U          Gesamtspannung

$v_1, v_{11}$    erste Strömungsgeschwindigkeit

$v_2, v_{22}$    zweite Strömungsgeschwindigkeit

## Patentansprüche

1. Messarmatur zur Volumenstrommessung in einer insbesondere an eine Trink- oder Brauchwasser-Versorgungsleitung über einen Strömungsteiler angeschlossene Ringleitung, wobei die Messarmatur ein Messrohr (1) umfasst, das mit einem mittels Magnetanordnung erzeugtem Magnetfeld (B) durchsetzt wird und wenigstens zwei diametral angeordnete Messelektroden (5, 7) zur Messung der induktiv erzeugten Spannung ($U$, $U_1$, $U_2$) aufweist, die mit einer Messeinrichtung zur Ermittlung, Anzeige und/oder Übertragung des gemessenen Volumenstromes ($Q_p$) verbunden sind,
**dadurch gekennzeichnet,**
**dass** das Messrohr (1) wenigstens zwei Strömungskanäle (2, 3) umfasst, die jeweils senkrecht zu Ihrer Erstrekkungsrichtung von einem Magnetfeld (B) durchsetzt werden, wobei jedem Strömungskanal (2, 3) eine der diametral angeordneten Messelektroden (5, 7) zugeordnet ist, mit Hilfe derer in Verbindung mit einer in der diametralen Anordnungsebene der Messelektroden (5, 7), zwischen den Strömungskanälen (2, 3) vorgesehene Mittelelektrode (6) eine in dem Messrohr (1) induktiv erzeugte Gesamtspannung (U) erfassbar ist.

2. Messarmatur nach Anspruch 1, **dadurch gekennzeichnet, dass** die Strömungskanäle (2, 3) derart ausgebildet sind, dass sie wenigstens über einen gemeinsamen Trennwandabschnitt (4) verfügen.

3. Messarmatur nach Anspruch 1 oder 2, **dadurch gekennzeichnet, dass** der Trennwandabschnitt (4) wenigstens in der Ebene der diametral angeordneten Messelektroden (5, 6, 7) angeordnet ist, und dass der Trennwandabschnitt (4) in dieser Ebene die diametral zu den Messelektroden (5, 7) angeordnete Mittelelektrode (6) umfasst.

4. Messarmatur nach Anspruch 3, **dadurch gekennzeichnet, dass** die Messeinrichtung derart ausgelegt ist, dass in den Strömungskanälen (2, 3) ein Magnetfeld mit gleicher Feldstärke (B) erzeugt wird, die Summe der in den Strömungskanälen (2, 3) vorhandenen Teilspannungen ($U_1$, $U_2$) als eine Gesamtspannung (U) direkt erfasst und der Volumenstrom ($Q_p$) mit Hilfe der allgemeinen Formel $Q_p = U*A/(k*B*D)$ ermittelt wird, wobei U die erfasste Gesamtspannung, A die durchströmte Querschnittsfläche, B die Magnetfeldstärke, D der direkte Elektrodenabstand zweier gegenüberliegender Messelektroden und k ein vorbestimmt gewählter Proportionalitätsfaktor ist.

5. Messarmatur zur Volumenstrommessung in einer insbesondere an eine Trink- oder Brauchwasser-Versorgungsleitung über einen Strömungsteiler angeschlossene Ringleitung, wobei die Messarmatur ein Messrohr (1) umfasst, das mit einem mittels Ultraschallanordnung (S1/E1; S2/E2) erzeugtem Ultraschallsignal durchsetzt wird, wobei die Ultraschallanordnung wenigstens zwei Ultraschallsender mit Empfänger (S1/E1; S2/E2) umfasst, die in einer Querschnittsebene des Messrohres (1) diametral und in Strömungsrichtung ($Q_{11}$, $Q_{22}$) unter einem vorbestimmten Winkel ($\alpha_2$) zueinander versetzt an dem Messrohr (1) angeordnet sind und mit einer Messeinrichtung zur Ermittlung, Anzeige und/oder Übertragung des gemessenen Volumenstromes ($Q_p$) verbunden sind,
**dadurch gekennzeichnet,**
**dass** das Messrohr (10) wenigstens zwei Strömungskanäle (12, 13) umfasst, die wenigstens im Erstreckungsbereich der Ultraschallanordnung einen gemeinsamen Ultraschall durchlässigen Trennwandabschnitt (14) aufweisen.

6. Messarmatur nach Anspruch 5, **dadurch gekennzeichnet, dass** die Ultraschallanordnung derart ausgelegt ist, dass gemessene Ultraschall-Signallaufzeiten ($T_{S1->E2}$; $T_{S2->E1}$) von Sender (S1; S2) zu Empfänger (E2; E1) an die Messeinrichtung übermittelt werden, und dass die Messeinrichtung vorgesehen ist, auf Basis der gemessenen Signallaufzeiten ($T_{S1->E2}$; $T_{S2->E1}$) den Volumenstrom ($Q_p$) zu ermitteln.

7. Messarmatur nach einem der Ansprüche 1 bis 6, **dadurch gekennzeichnet, dass** die Strömungskanäle (2, 3; 12, 13) wenigstens im Erstreckungsbereich des Trennwandabschnittes (4; 14) eine identische Querschnittsgeometrie (D, A; $D_2$, $A_2$) aufweisen.

8. Messarmatur nach einem der vorherigen Ansprüche, **dadurch gekennzeichnet, dass** die Strömungskanäle jeweils mit einem an die Trink- oder Brauchwasser-Versorgungsleitung angeschlossenen, der Ringleitung zugeordneten Leitungsabschnitte verbunden sind.

9. Messarmatur nach einem der vorherigen Ansprüche, **dadurch gekennzeichnet, dass** die Strömungskanäle parallel zueinander angeordnet sind.

10. Verfahren zur Ermittlung eines Differenz- oder Summenvolumenstromes in einer insbesondere an eine Trink- oder Brauchwasserversorgungsleitung über einen Strömungsteiler angeschlossene Ringleitung mittels eines Messrohres (1), das wenigstens zwei Strömungskanäle (2, 3) umfasst, die jeweils senkrecht zu ihrer Erstreckungsrichtung mit einem Magnetfeld (B) durchsetzbar sind, wobei den Strömungskanälen (2, 3) zwei diametral angeordnete Messelektroden (5, 7) und eine in der diametralen Anordnungsebene der Messelektroden (5, 7), zwischen den Strömungskanälen (2, 3) vorgesehene Mittelelektrode (6) zum Erfassen einer in dem Messrohr (1) induktiv erzeugten Gesamtspannung (U) zugeordnet sind, wobei das Verfahren die Schritte umfasst:

Anordnen einer Magnetfeldanordnung an dem Messrohr (1) zum Anlegen eines Magnetfeldes (B) in der die Messelektroden (5, 7) und die Mittelelektrode (6) umfassenden Anordnungsebene;
Anlegen des mittels der Magnetfeldanordnung erzeugten Magnetfeldes mit vorbestimmter Magnetfeldstärke (B) in jedem Strömungskanal (2; 3);
Messen der in dem Messrohr (1) induktiv erzeugten Gesamtspannung (U); und
Ermitteln des Differenz- oder Summenvolumenstromes ($Q_P$) auf Basis der gemessenen Gesamtspannung (U).

11. Verfahren zur Ermittlung eines Differenz- oder Summenvolumenstromes nach Anspruch 10, **dadurch gekennzeichnet, dass** die Strömungskanäle (2, 3) wenigstens in der die Messelektroden (5, 7) und die Mittelelektrode (6) umfassenden Anordnungsebene eine identische Durchtrittsfläche (A) aufweisen, dass in jedem Strömungskanal (2; 3) ein Magnetfeld mit gleicher Magnetfeldstärke (B) angelegt wird, und dass der Differenz- oder Summenvolumenstrom ($Q_P$) mittels der Formel

$$Q_P = U * A / (k * B * D) \qquad (1),$$

ermittelt wird, wobei U die gemessene Gesamtspannung, A die Durchtrittsfläche des Strömungskanals (2; 3), B die Magnetfeldstärke, D der direkte Elektrodenabstand zweier gegenüberliegender Elektroden und k ein vorbestimmt gewählter Proportionalitätsfaktor ist.

12. Verfahren zur Ermittlung eines Differenz- oder Summenvolumenstromes in einer insbesondere an eine Trink- oder Brauchwasserversorgungsleitung über einen Strömungsteiler angeschlossene Ringleitung mittels eines Messrohres (1), das wenigstens zwei Ultraschallsignal durchlässige Strömungskanäle (12, 13) umfasst, die einen gemeinsamen Ultraschall durchlässigen Trennwandabschnitt (14) aufweisen, wobei das Verfahren die Schritte umfasst:

Anordnen einer Ultraschallanordnung aufweisend wenigstens zwei Ultraschallsender mit Empfänger (S1/E1;

S2/E2) an dem Messrohr (1) derart, dass die Ultraschallsender mit Empfänger (S1/E1; S2/E2) in einem Erstreckungsbereich des gemeinsamen Ultraschall durchlässigen Trennwandabschnitts (14) und in einer Querschnittsebene des Messrohres (1) diametral und in Strömungsrichtung ($Q_{11}$, $Q_{22}$) unter einem vorbestimmten Winkel ($\alpha_2$) zueinander versetzt an dem Messrohr (1) angeordnet sind; Aussenden eines Ultraschallsignals von jedem Ultraschallsender (S1, S2);
Messen der jeweiligen Signallaufzeit zwischen Ultraschallsender (S1; S2) und gegenüberliegendem Empfänger (E2; E1); und
Ermitteln des Differenz- oder Summenvolumenstromes ($Q_P$) auf Basis der gemessenen Signallaufzeiten.

13. Verfahren zur Ermittlung eines Differenz- oder Summenvolumenstromes nach Anspruch 12, **dadurch gekennzeichnet, dass** die Strömungskanäle (12; 13) eine gleiche Durchtrittsfläche ($A_2$) und einen gleichen Durchmesser ($D_2$) aufweisen, und dass der Differenz- oder Summenvolumenstrom ($Q_P$) mittels der Formel

$$Q_P = (4{*}A_2{*}D_2/\sin(2\alpha_2)){*}((T_{S2\text{->}E1} - T_{S1\text{->}E2})/(T_{S2\text{->}E1}{*}T_{S1\text{->}E2})), \qquad (2)$$

ermittelt wird, wobei $A_2$ die Durchtrittsfläche der Strömungskanäle (12, 13), $D_2$ der Durchmesser des Strömungskanals (12; 13), $\alpha_2$ der Abstrahlwinkel des Ultraschallsignals innerhalb des Strömungskanals (12; 13) ist und $T_{S1\text{->}E2}$ und $T_{S2\text{->}E1}$ die Signallaufzeiten des jeweiligen Ultraschallsignals zwischen entsprechenden Ultraschallsender (S1; S2) und gegenüberliegendem Empfänger (E2; E1) sind.

14. Verfahren zur Ermittlung eines Differenz- oder Summenvolumenstromes nach Anspruch 12 oder 13, **dadurch gekennzeichnet, dass** die Ultraschallsignale der Ultraschallsender (S1, S2) gleichzeitig ausgesandt werden.

Fig. 1

Fig. 2

Europäisches
Patentamt

European
Patent Office

Office européen
des brevets

**EUROPÄISCHER RECHERCHENBERICHT**

Nummer der Anmeldung

EP 09 01 2190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 19 51 378 A1 (SIEMENS AG) 29. April 1971 (1971-04-29) * das ganze Dokument * ----- | 1-4, 10-11 | INV. G01F1/56 G01F1/66 |
| X | DE 30 36 457 A1 (SIEMENS AG [DE]) 13. Mai 1982 (1982-05-13) * das ganze Dokument * ----- | 5-9, 12-14 | |
| X | US 4 850 220 A (ASANO KIYOKAZU [JP] ET AL) 25. Juli 1989 (1989-07-25) * Spalte 4; Abbildung 2 * ----- | 5-9, 12-14 | |
| X | US 4 523 478 A (ZACHARIAS JR ELLIS M [US]) 18. Juni 1985 (1985-06-18) * Spalte 3; Abbildung 3 * ----- | 5-9, 12-14 | |

RECHERCHIERTE
SACHGEBIETE (IPC)

G01F

Der vorliegende Recherchenbericht wurde für alle Patentansprüche erstellt

| Recherchenort | Abschlußdatum der Recherche | Prüfer |
|---|---|---|
| München | 16. November 2009 | Fenzl, Birgit |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
  Dokument

EPO FORM 1503 03.82 (P04C03)

# EP 2 169 359 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2009

| Im Recherchenbericht angeführtes Patentdokument | | Datum der Veröffentlichung | Mitglied(er) der Patentfamilie | | Datum der Veröffentlichung |
|---|---|---|---|---|---|
| DE 1951378 | A1 | 29-04-1971 | BE | 757310 A1 | 09-04-1971 |
| | | | FR | 2064252 A7 | 16-07-1971 |
| | | | JP | 52044214 B | 05-11-1977 |
| | | | JP | 52044215 B | 05-11-1977 |
| | | | LU | 61849 A1 | 04-05-1971 |
| | | | NL | 7014456 A | 14-04-1971 |
| DE 3036457 | A1 | 13-05-1982 | JP | 57094616 A | 12-06-1982 |
| | | | US | 4409847 A | 18-10-1983 |
| US 4850220 | A | 25-07-1989 | JP | 2556701 B2 | 20-11-1996 |
| | | | JP | 63286162 A | 22-11-1988 |
| US 4523478 | A | 18-06-1985 | KEINE | | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008003044